Europäisches Patentamt

European Patent Office

Office européen des brevets

(19)

(11) Veröffentlichungsnummer: **0 193 120**
**A1**

(12) # EUROPÄISCHE PATENTANMELDUNG

(21) Anmeldenummer: 86102243.2

(22) Anmeldetag: 20.02.86

(51) Int. Cl.⁴: **E 21 D 11/10**
**E 04 G 21/04**

(30) Priorität: 23.02.85 DE 3506463

(43) Veröffentlichungstag der Anmeldung:
03.09.86 Patentblatt 86/36

(84) Benannte Vertragsstaaten:
AT CH DE FR GB IT LI

(71) Anmelder: Maschinenfabrik Walter Scheele GmbH &
Co. KG
Nordstrasse
D-4750 Unna-Massen(DE)

(72) Erfinder: Hühne, Dieter
Rademacherweg 20
D-4750 Unna(DE)

(74) Vertreter: Zahn, Roland, Dipl.-Ing.
Berghausener Strasse 10
D-7500 Karlsruhe 41 Grötzingen(DE)

(54) **Einrichtung zur Betonverteilung in eine Mehrzahl von Füllstutzen.**

(57) Bei einer Einrichtung zur Auskleidung des Freiraums hinter einer mit Füllöffnungen versehenen Schalung beim Tunnel- bzw. Stollenbau, wobei das Füllmedium, insbesondere Beton, mittels einer Pumpe über eine Förderleitung durch die Füllöffnungen gedrückt wird, ist eine Mehrzahl von Förderleitungen (13) vorgesehen, deren der Pumpe zugewandte Anschlüsse (a . . . f) rotationssymmetrisch an einer Verteilerplatte (2) angeflanscht sind. Über einen schwenkbaren, insbesondere S-förmigen Betonverteiler (7), dessen der Pumpe zugewandter Anschluß über eine Drehkupplung (6) koaxial zur Symmetrieachse (X) mit dem zur Pumpe führenden Leitungsstutzen (5) verbunden ist, ist der zweite Anschluß nacheinander mit den Förderleitungen (13) verbindbar.
Damit lassen sich in ein und derselben Grundstellung der Einrichtung mehrere axial hintereinander liegende Füllöffnungen bedienen.

Fig. 2

EP 0 193 120 A1

0193120

## Einrichtung zur Betonverteilung

## in eine Mehrzahl von Füllstutzen

Die vorliegende Erfindung bezieht sich auf eine Einrichtung nach dem Oberbegriff des Patentanspruchs 1.

Derartige Einrichtungen sind bekannt (vgl.DE-PS 24 52 247, DE-OS 31 41 273, DE-OS 31 41 272); sie haben sich im allgemeinen auch gut bewährt. Diese bekannten Tunnelbetoniereinrichtungen sind dadurch charakterisiert, daß sie ein radial um die Tunnalachse schwenkbares Betonleitungsende aufweisen, das über ein teleskopierbares oder sonstwie ausfahrbares Endstück die Verbindung zur jeweiligen Füllöffnung (Betonierfenster) herstellt. Um die einzelnen, in Tunnelachse betrachtet hintereinander liegenden Füllöffnungen bedienen zu können, müssen die bekannten Tunnelbetoniereinrichtungen auf längs der Tunnelachse verfahrbaren Wagenkonstruktionen angeordnet sein. Dies bedeutet einen relativ hohen konstruktiven Aufwand; auch ist das jeweilige Verfahren der Wagen recht zeitaufwendig.

Die der vorliegenden Erfindung zugrunde liegende Aufgabe besteht darin, eine Einrichtung der gattungsgemäßen Art anzugeben, mit der nach einem einfachen Grundprinzip nacheinander mehrere, und zwar auch hintereinander liegende Füllöffnungen bedient werden können. Damit soll gleichzeitig der Zeitaufwand für Tunnelbetonierungen verkürzt werden.

Diese Aufgabe wird durch die im kennzeichnenden Teil des Patentanspruchs 1 definierten Merkmale gelöst.

Weiterbildungen und besondere Ausgestaltungen dieser Erfindung sind Gegenstand der Unteransprüche. Die Einzelheiten werden im folgenden anhand der Zeichnungen näher erläutert.

Fig. 1      zeigt in zwei Ansichten das erfindungsgemäße Gerät als konstruktive Einheit;

Fig. 2      zeigt ein Anwendungsbeispiel der erfindungsgemäßen Einrichtung.

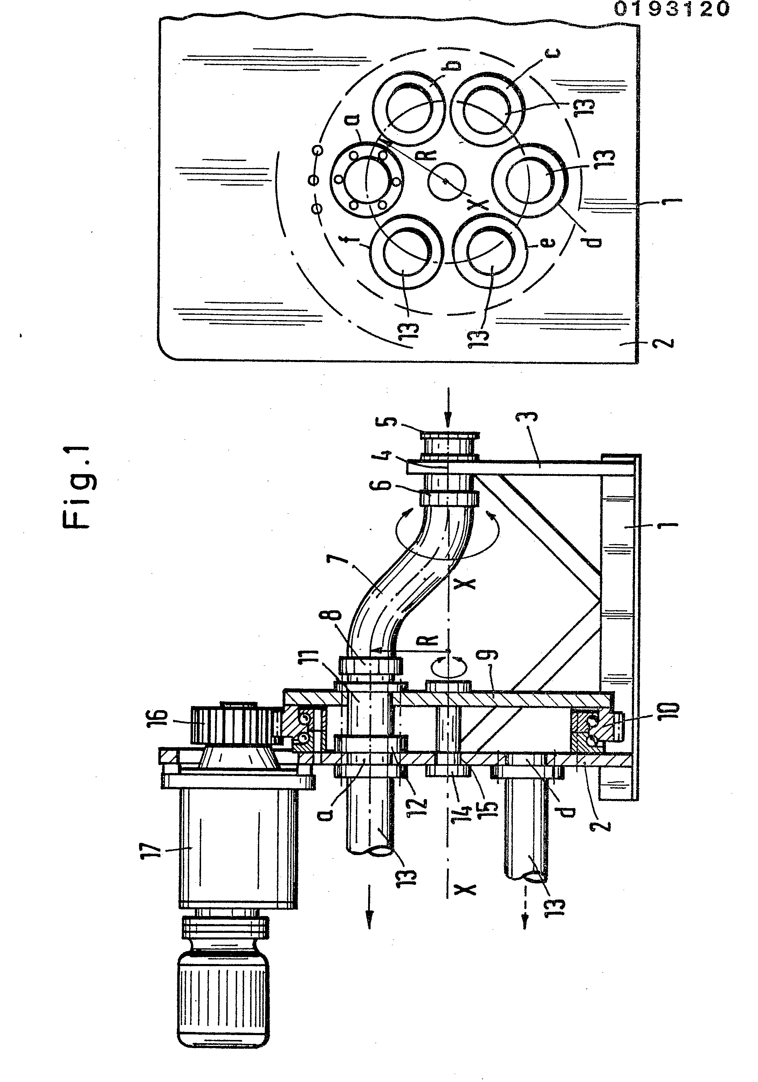

Gemäß Fig. 1 ist die erfindungsgemäße Tunnelbetoniereinrichtung auf eine starre Stützrahmenkonstruktion aufgebaut, die aus einer Grundplatte 1 , einer Verteilerplatte 2 und einer Halteplatte 3 besteht. Die Verteilerplatte 2 und die Halteplatte 3 stehen lotrecht auf der Grundplatte 1 und zwar in einem bestimmten Abstand zueinander. (Dieser Abstand ist abhängig von der Form und den Maßen des Betonverteilers - wie noch erläutert wird).

In der Halteplatte 3 ist eine Lagerstelle 4 für einen Leitungsstutzen 5 vorgesehen, der seinerseits mit der von einer (nicht gezeichneten) Betonpumpe ausgehenden Betonleitung verbindbar ist.

An die Verteilerplatte 2 ist eine Mehrzahl (im dargestellten Beispiel sind es sechs) von Förderleitungen angeflanscht und zwar so, daß diese Förderleitungen 13 (vgl.Seitenansicht a...f) rotationssymmetrisch angeordnet sind. Das Symmetriezentrum (A chse X) liegt dabei koaxial zur Achse des Leitungsstutzens 5 bzw. der Lagerstelle 4 in der Halteplatte 3.

0193120

Gemäß dem gezeichneten Ausführungsbeispiel sind also
sechs Förderleitungsanschlüsse  a...f  auf einem Kreis
(mit Radius R ) um die Achse  X  angeordnet; dabei
spielt es grundsätzlich keine Rolle, ob an diese Förderleitungsanschlüsse  a...f  Schläuchleitungen oder starre
Rohrleitungen angeschlossen sind.

Der Kern der Erfindung liegt nun darin, daß diese Förderleitungsanschlüsse  a...f  bzw. die Förderleitungen  13
selbst, nacheinander (das ist jedoch nicht als bestimmte
Folge oder Ordnungssystem zu verstehen) mit dem Leitungsstutzen  5  und damit mit der Betonpumpe verbunden werden
können. Diese Verbindung wird über einen Betonverteiler 7
hergestellt, der als (in Verbindung mit Betonpumpen bekanntes) S-förmiges Rohrstück zwischen den Leitungsstutzen 5
einerseits und den Förderleitungsanschlüssen  a...f  andererseits drehbar angeordnet ist.

Das eine Ende des S-Rohrstücks ist über eine Drehkupplung
6  mit dem Leitungsstutzen  5  gekoppelt. (Die Drehachse
verläuft koaxial zur Achse X). Durch diese Verbindung
wird somit bei Drehung des Betonverteilers  7  in der Drehkupplung  6  das zweite Ende des Betonverteilers  7  auf
einem Kreisbogen bewegt. Dieser Kreisbogen korrespondiert
mit dem kreisbogen  R , auf dem die Förderleitungsanschlüsse  a...f  angeordnet sind, damit bei entsprechender
Winkelstellung des Betonverteilers  7  eine durchgängige
Rohrverbindung von Leitungsstutzen  5  zu jeweils einer
Förderleitung  13  gegeben ist.

Grundsätzlich kann das genannte zweite Ende des Betonverteilers  7  selbst vor den Förderleitungsanschlüssen a...f
vorbeigeführt und an diese angedrückt werden. Gemäß dem in
Fig. 1 gezeichneten Ausführungsbeispiel wird dieser Übergang vom Betonverteiler 7 zur Förderleitung 13 von einem Verbindungsstutzen 11 übernommen, der über einen Flansch 8 am Betonverteiler 7 angeflanscht ist und der darüberhinaus durch eine Drehplatte 9 reicht und über einen Dichtring 12 an der Verteilerplatte 2 anliegt. Mit einer Drehung des Betonverteilers 7 koaxial zur Achse X wird somit der Verbindungsstutzen 11 mit seinem Dichtring 12 von einem Förderleitungsanschluß zu einem anderen verdreht .

Diese Drehbewegung wird über die Drehplatte 9 vermittelt, die über einen Lagerbolzen 14 bzw. ein Lager 15 in der Verteilerplatte 2 drehbar aufgehängt ist. Als Antriebsaggregat selbst dient ein Elektromotor 17 , der über ein Antriebsritzel 16 mit einer Kugeldrehverbindung (Drehkranz) 10 kämmt, die einerseits fest mit der Verteilerplatte 2 und andererseits fest mit der Drehplatte 9 verbunden ist. Das Antriebsaggregat selbst wird dabei jeweils der gewünschten Arbeitsstellung entsprechend angesteuert, wobei ergänzend noch bemerkt werden soll, daß die exakten Zuordnungen zwischen der Betonverteilerstellung und dem gewünschten Förderleitungsanschluß über Nockenendschalter überwacht bzw. gewährleistet sind.

Gemäß der Darstellung von Fig. 1 wird der Betonfluß vom Leitungsstutzen 5 über den Betonverteiler 7 und den Verbindungsstutzen 11 an die am Förderleitungsanschluß a angeschlossene Förderleitung 13 abgegeben. Soll z.B. die am Förderleitungsanschluß d angeschlossene Förderleitung 13 als nächste bedient werden, so muß die Dreh- platte 9 um 180° verdreht werden.

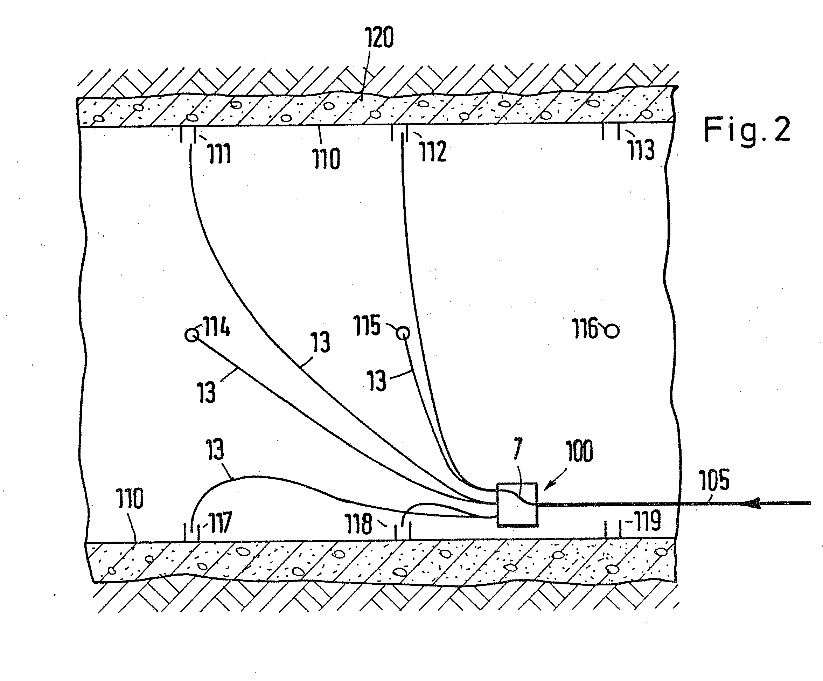

Die Erfindung soll nochmals anhand von Fig. 2 erläutert werden.

Im Mittelpunkt steht die anhand Fig. 1 im Detail beschriebene Tunnelbetoniereinrichtung 100, die hier – gemäß Fig. 2 – in einem Tunnel abgestellt ist. Dieser Tunnel ist mit einer Schalung 110 versehen, über die der mit Beton zu füllende Freiraum 120 zum Gebirge hin begrenzt wird. In der Schalung 110 ist eine Mehrzahl sogenannter Betonierfenster 111 ...119 angeordnet, an die zwecks Einpumpen des Betons Betonförderleitungen angeschlossen werden können.

Mit den bekannten Tunnelbetoniereinrichtungen können jeweils nur die Betonierfenster bedient werden, die radial um die Tunnelachse in einer Ebene liegen (z.B. 112, 115, 118 oder 111, 114,117), wobei jedoch das jeweilige Ansetzen der Förderleitung an ein Betonierfenster recht zeitaufwendig bleibt.

Mit der vorliegenden Erfindung können nun gleichzeitig jeweils mehrere (z.B. sechs) Betonierfenster 111...119 über die Förderleitungen 13 mit der BEtonverteilereinrichtung verbunden werden. Je nach aktueller Stellung des Betonverteilers 7 wird gerade durch eine Förderleitung 13 Beton von der Betonpumpe über die Betonleitung 105 in ein Betonierfenster gepumpt.

In beliebiger Reihenfolge können so die Freiräume zwischen Schalung und Gebirge nacheinander gefüllt werden.

P a t e n t a n s p r ü c h e

1. Einrichtung zur Auskleidung des Freiraums hinter einer mit Füllöffnungen versehenen Schalung beim Tunnel- bzw. Stollenbau, wobei das Füllmedium, insbesondere Beton, mittels einer Pumpe über eine Förderleitung durch die Füllöffnungen gedrückt wird,

d a d u r c h   g e k e n n z e i c h n e t ,

daß eine Mehrzahl von Förderleitungen (13) vorgesehen ist, deren der Pumpe zugewandte Anschlüsse ( a...f) rotations-symmetrisch an einer Verteilerplatte (2) angeflanscht sind, und daß ein schwenkbarer, insbesondere S-förmiger Betonverteiler (7) vorgesehen ist, dessen der Pumpe zugewandter Anschluß über eine Drehkupplung (6) koaxial zur Symmetrieachse (X) mit dem zur Pumpe führenden Leitungsstutzen (5) verbunden ist, und der so geformt ist, daß sein zweiter Anschluß durch Drehen des Betonverteilers (7) nacheinander mit den Förderleitungen (13) verbindbar ist.

2. Einrichtung nach Anspruch 1,

   d a d u r c h   g e k e n n z e i c h n e t ,

   daß der zweite Anschluß des Betonverteilers '(7) mit einem Verbindungsstutzen (11) gekoppelt

   -ist (Flansch 8), der an eine Drehplatte (9) angeflanscht ist  und durch diese Drehplatte hindurch zur Verteilerplatte (2) führt, und daß die Drehplatte (9) zusammen mit dem Verbindungsstutzen (11) und dem angeflanschten Betonverteiler (7) koaxial zur Achse des Leitungsstutzens (5) verdrehbar gelagert ist.


3. Einrichtung nach Anspruch 1 oder 2,

   d a d u r c h   g e k e n n z e i c h n e t ,

   daß der Leitungsstutzen (5) mit einer Halteplatte (3) verflanscht ist.


4. Einrichtung nach Anspruch 3,

   d a d u r c h   g e k e n n z e i c h n e t ,

   daß Verteilerplatte (2) und Halteplatte (3) zu einem starren Stützrahmen zusammengefügt

   sind.

# Fig.1

1/2

0193120

Fig. 2

0193120

| Europäisches Patentamt | EUROPÄISCHER RECHERCHENBERICHT | |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-C-3 229 103  (WIBAU) <br> * Spalte 5, Zeile 28 - Spalte 6, Zeile 48; Figuren * | 1-4 | E 21 D   11/10 <br> E 04 G   21/04 |
| A | DE-A-3 219 882  (SCHEELE) <br> * Zusammenfassung; Figur 1 * | 1 | |
| A | DE-A-3 122 820  (SCHEELE) <br> * Figur 1 * | 1 | |
| A | EP-A-0 101 802  (WIBAU) <br> * Zusammenfassung; Figuren 1-3 * | 1 | |
| A,D | DE-A-3 141 273  (SCHEELE) <br> * Zusammenfassung; Figur 1 * | 1 | |
| A,D | DE-A-3 141 272  (SCHEELE) <br> * Zusammenfassung; Figur 1 * | 1 | |
| A,D | DE-A-2 452 247  (UNIVERSALE HOCH- UND TIEFBAU AG) <br> * Figur 1 * | 1 | |

**RECHERCHIERTE SACHGEBIETE (Int. Cl.4)**

E 21 D
E 21 F
E 04 G
E 04 F

Der vorliegende Recherchenbericht wurde für alle Patentansprüche erstellt.

| Recherchenort <br> DEN HAAG | Abschlußdatum der Recherche <br> 09-06-1986 | Prüfer <br> RAMPELMANN J. |
|---|---|---|